# EUROPEAN PATENT APPLICATION

(11) **EP 2 348 397 A2**
(43) Date of publication of application: **27.07.2011**
(21) Application number: 10165717.9
(22) Date of filing: 11.06.2010
(51) Int. Cl.: G06F 3/12

(54) **Printer system with input function**

(30) Priority: 05.01.2010 KR 20100000598
(71) Applicant: Bixolon Co., Ltd., Suwon-si Gyeonggi-do 443-702 (KR)
(72) Inventor: Lim, Heung Jun, Gyeonggi-do 443-470 (KR); Kim, Byung Gon, Gyeonggi-do 442-828 (KR)
(74) Representative: Heine, Christian Klaus

(57) **Abstract**

Disclosed herein is a printer system. When a user presses a button, a button unit generates and outputs a key value corresponding to the button. A printer is directly connected to the button unit, and generates and outputs command data designated for the key value input from the button unit. A host computer receives the command data generated by the printer and sends the command data to one of target computers.

## Description

### CROSS REFERENCE TO RELATED APPLICATION

This application claims the benefit of Korean Patent Application No. 10-2010-0000598, filed on January 5, 2010, entitled "Printer System with Input Function," which is hereby incorporated by reference in its entirety into this application.

### BACKGROUND OF THE INVENTION

### 1. Technical Field

The present invention relates to a printer system with an input function.

### 2. Description of the Related Art

Generally, a printer refers to an output device for printing information processed by an electronic device, such as a computer, in a form which can be visually seen.

Recent printers are provided to be connected to a network, so that such a printer can access a single computer using a protocol, such as Transmission Control Protocol/Internet Protocol (TCP/IP), even when the printer is not locally connected to the computer.

That is, output can be performed by sending information to a desired printer over a company network.

As described above, when a printer is used over a network, a plurality of computers can share a single printer among each other, thereby increasing the convenience to the user.

However, such a printer has performed a simple output function for printing data transferred from a host computer as before. Even in the industrial printer field, printers have only performed passive operational functions in response to commands from a host computer and have not performed active functions.

### SUMMARY OF THE INVENTION

Accordingly, the present invention has been made keeping in mind the above problems occurring in the prior art, and the present invention is intended to provide a printer system with an input function, which is provided with a button unit, so that the request of a printer user can be sent to a host computer and then an action suitable to the request of the user can be performed.

In accordance with an aspect of the present invention, there is provided a printer system including: a button unit configured to, when a user presses a button, generate and output a key value corresponding to the button; a printer directly connected to the button unit, and configured to generate and output command data designated for the key value input from the button unit; and a host computer configured to receive the command data generated by the printer and send the command data to one of target computers.

Further, the button unit of the present invention includes one or more buttons; and a button control unit for, when each of the buttons is pressed, generating a key value corresponding to the pressed button.

The printer of the present invention includes a button input unit for receiving the key value from the button unit; a command generation unit for generating the command data based on the key value input from the button input unit by referring to a key value table, and outputting the generated command data; a transmission/reception unit for transmitting/receiving data to/from the host computer; and a control unit for transmitting the command data input from the command generation unit to the host computer through the transmission/reception unit.

Further, when the host computer of the present invention notifies the printer that the host computer is in the command reception standby mode, the printer generates command data according to the key value from the button unit and sends the command data to the host computer when the host computer is in the command reception standby mode.

Further, in accordance with another aspect of the present invention, there is provided a printer system including: a button input unit for receiving the key value from the button unit; a command generation unit for generating the command data based on the key value input from the button input unit by referring to a key value table, and outputting the generated command data; a transmission/reception unit for transmitting/receiving data to/from the host computer; and a control unit for transmitting the command data input from the command generation unit to the host computer through the transmission/reception unit.

Further, the host computer of the present invention includes a command generation unit for generating the command data based on the key value input from the button input unit by referring to a key value table, and outputting the generated command data; and a host controller for receiving the key value sent from the printer, sending the key value to the command generation unit, and sending the command data input from the command generation unit to the relevant target computer.

Further, when the host computer of the present invention notifies the printer that the host computer is in a command reception standby mode, the printer sends the key value input from the button unit to the host computer when the host computer is in the command reception standby mode.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram of a printer system with an input function according to a first embodiment of the present invention;
FIG. 2 is a diagram showing the internal construction of the printer and button unit of FIG. 1;
FIG. 3 is a diagram showing the connection of a plurality of target computers to the printer of FIG. 1; and
FIG. 4 is a diagram of a printer system with an input function according to a second embodiment of the present invention.

### DESCRIPTION OF THE PREFERRED EMBODIMENTS

It should be noted that the same reference numerals are used throughout the different drawings to designate the same or similar components when reference is made to the components in the description. Further, when it is determined that the detailed descriptions of well-known techniques related to the present invention would obscure the gist of the present invention, they will be omitted below.

Embodiments of the present invention will be described in detail below by referring to the accompanying drawings.

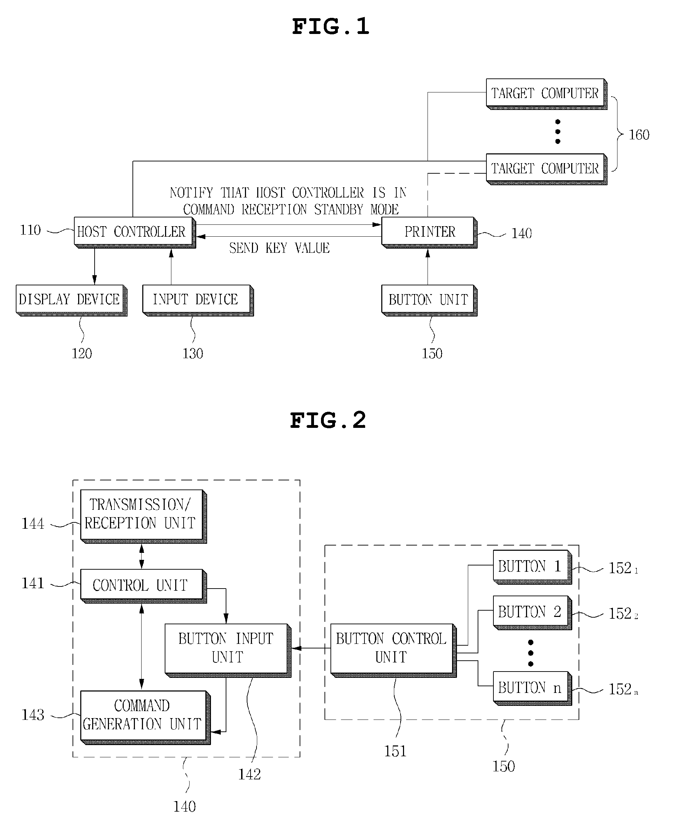

FIG. 1 is a diagram of a printer system with an input function according to a first embodiment of the present invention.

As shown in FIG. 1, the printer system with an input function according to the first embodiment of the present invention includes a host controller 110, a display device 120, an input device 130, a printer 140, a button unit 150, and a plurality of target computers 160. The host controller 110, the display device 120, and the input device 130 constitute a host computer. The plurality of target computers 160 includes a back-office terminal, a mobile terminal, a Point Of Sale (POS) terminal, a surveillance camera terminal, a cashbox control terminal, a melody box terminal, and a sequence number output terminal.

Here, the host controller 110 runs POS application software, such as accounting software, and sends printing data to the printer 140 so that the printer performs printing.

Further, in a non-printing mode, the host controller 110 notifies the printer 140 that the host controller 110 is in a command reception standby mode. When command data for a specific one of the target computers 160 is input from the printer 140, the host controller 110 sends the command data to the corresponding target computer 160.

Further, the display device 120 displays a product price. The input device 130 includes a keyboard or a scanner, and receives requests from a user.

The printer 140 prints a receipt, and, when the host controller 110 is in the command reception standby mode, the printer 140 forms command data designated according to a key value input from the button unit 150 and sends the command data to the host controller 110. Here, the printer 140 may be a receipt printer, a label printer, a mobile printer, or an industrial printer.

Further, the printer 140 can communicate with the host controller 110 via a wired or wireless connection. In the case of wireless communication, the communication is performed using a local area communication method, such as ZigBee, Radio-Frequency IDentification (RFID), and Bluetooth. Of course, the printer 140 can directly send the command data to one of the target computer 160 without the intervention of the host controller 110.

The button unit 150 includes n buttons and, if a user selects and presses one of the n buttons, outputs the key value of the pressed button to the printer 140.

Meanwhile, each of the target computers 160 receives command data from the host controller 110 and performs an operation according to the command data.

FIG. 2 is a diagram showing the internal construction of the printer 140 and button unit 150 of FIG. *1.

Referring to this drawing, the printer 140 of FIG. 1 includes a control unit 141, a button input unit 142, a command generation unit 143 and a transmission/reception unit 144, and the button unit 150 includes a button control unit 151 and n buttons 152₁ to 152ₙ.

When the control unit 141 is notified that the host controller 110 is in the command reception standby mode by the host controller 110, the control unit 141 instructs the button input unit 142 to receive the output of the button unit.

When a key value is received from the button unit through the button input unit 142, the control unit 141 instructs the command generation unit 143 to generate command data according to the received key value, and receives the generated command data.

Thereafter, the control unit 141 sends the received command data to the host controller 110 through the transmission/reception unit 144.

Meanwhile, when a control signal requesting the reception of the output of the button unit is received from the control unit 141, the button input unit 142 receives a key value from the button unit using an interrupt or polling method.

Further, when the key value received from the button unit is input from the button input unit 142, the command generation unit 143 generates command data corresponding to the key value by referring to a stored key value table, and then provides the generated command data to the control unit 141.

Here, an example of the key value table is shown in Table 1, and the command generation unit 143 generates commands corresponding to respective key values by referring to Table 1 and then outputs the generated commands.

**Table 1**

| Key value | Command | Remarks |
|---|---|---|
| 1 | Call back office - out of paper | |
| 2 | Call back office - out of ingredients | |
| 3 | Call back office - customer expresses complaints | |
| 4 | Call mobile terminal possessor - preparation of food is completed | |
| 5 | Request POS terminal to perform display | Specific advertisement or advertising slogan is previously determined |
| 6 | Request surveillance camera terminal to photograph | |
| 7 | Request cashbox control terminal to open cashbox | |
| 8 | Request melody box terminal to output melody | |
| 9 | Request sequence number output terminal to output sequence number | |
| 10 | Request alarm bell terminal to call nearby police station | |

Meanwhile, the transmission/reception unit 144 sends the input command data to the host controller 110.

Here, the transmission/reception unit 144 may employ any one of communication methods using a serial port, a parallel port, a Universal Serial Bus (USB) port, an Ethernet, a Wireless Local Area Network (WLAN), and Bluetooth.

Here, the transmission/reception unit 144 can directly send the input command data not to the host controller 110 but to an object target computer 160.

Meanwhile, the button control unit 151 monitors the plurality of buttons 152₁ to 152ₙ, generates the key value of a pressed button, and then sends the generated key value to the button input unit 142.

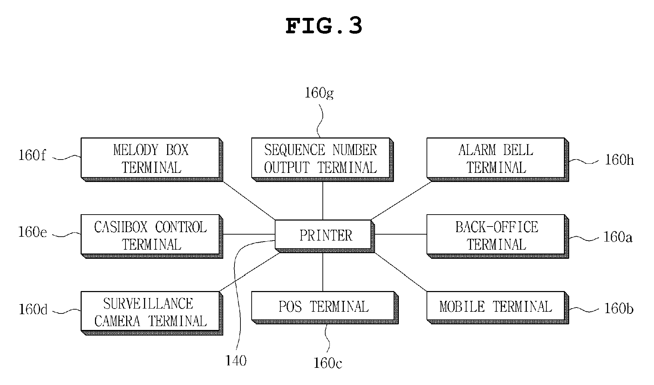

FIG. 3 is a diagram showing the connection of the plurality of target computers to the printer of FIG. 1. The plurality of target computers includes a back-office terminal 160a, a mobile terminal 160b, a POS terminal 160c, a surveillance camera terminal 160d, a cashbox control terminal 160e, a melody box terminal 160f, a sequence number output terminal 160g, and an alarm bell terminal 160h.

Here, the back-office terminal 160a is a terminal used by a manager or engineer in a store. If the user of the printer 140 presses a designated one of the buttons connected to the printer 140 (for example, referring to Table 1, one of buttons 1, 2, and 3) when the paper of the printer 140 is out of stock, ingredients are insufficient or a client expresses a complaint, the printer 140 generates call command data including content corresponding to the pressed button and then sends the call command data to the back-office terminal 160a.

Thereafter, the back-office terminal 160a notifies the manager or engineer, who is the user of the back-office terminal 160a, of the call command and the reason for the call based on the call command, so that the manager or engineer can move to a relevant place and then take appropriate measures.

Next, the mobile terminal 160b is a terminal which is carried and moved by a service worker in a store.

If a button designated for the completion of the preparation of ordered food (for example, referring to Table 1, button 4) is pressed when the preparation of the ordered food is completed in a kitchen in which the printer 140 is located, the printer 140 generates mobile terminal possessor call command data corresponding to the button, and sends the mobile terminal possessor call command data to the mobile terminal 160b.

Therefore, the service worker who carries the corresponding mobile terminal 160b checks the call command, moves to the kitchen, and carries the preparation-completed food to a relevant table.

Meanwhile, the POS terminal 160c is a terminal for displaying relevant content on a service worker display and a client display. With regard to this, if in order to display a specific advertisement or an advertising slogan on the service worker display and the client display, the user of the printer 140 presses a button designated in connection with the advertisement or advertising slogan (for example, referring to Table 1, button 5), the printer 140 generates display command data and sends the display command data to the POS terminal 160c.

Thereafter, the POS terminal 160c displays the specific advertisement or advertising slogan based on the display command data on the service worker display and the client display.

The surveillance camera terminal 160d is a terminal for controlling a surveillance camera. If the designated button connected to the printer 140 (for example, referring to Table 1, button 6) is pressed when the surveillance camera needs to be operated because a specific situation occurs in a kitchen in which the printer 140 is located, the printer 140 forms photographing request command data corresponding to the button and sends the photographing request command data to the surveillance camera terminal 160d.

Thereafter, the surveillance camera terminal 160d instructs the surveillance camera to photograph and record the specific situation.

Meanwhile, the cashbox control terminal 160e is a terminal for controlling a cashbox. When the user of the printer 140 presses a designated button (for example, referring to Table 1, button 7) in order to open the cashbox, the printer 140 sends cashbox opening command data to the cashbox control terminal 160e.

Thereafter, the cashbox control terminal 160e opens the cashbox based on the cashbox opening command data.

Next, the melody box terminal 160f is a terminal for controlling a melody box. When the user of the printer 140 desires to output a melody and presses a relevant button (for example, referring to Table 1, button 8), the printer 140 generates melody output command data and outputs the melody output command data to the melody box terminal 160f.

Thereafter, the melody box terminal 160f generates and outputs a melody based on the melody output command data.

Meanwhile, the sequence number output terminal 160g is a terminal for controlling a sequence number output device (here, the printer 140 may be the sequence number output terminal). If the user of the printer 140 desires to output a sequence number and presses a relevant button (for example, referring to Table 1, button 9), the printer 140 generates sequence number output command data and outputs the sequence number output command data to the sequence number output terminal 160g.

Thereafter, the sequence number output terminal 160g generates and outputs a sequence number based on the sequence number output command data.

Meanwhile, the alarm bell terminal 160h is a terminal for notifying a nearby police station of the occurrence of an emergency situation. When an emergency situation occurs and the user of the printer 140 presses a relevant button (for example, referring to Table 1, button 10), the printer 140 generates police call command data and outputs the police call command data to the alarm bell terminal 160h.

Thereafter, the alarm bell terminal 160h notifies the nearby police station of the emergency situation based on the police call command data and calls the police.

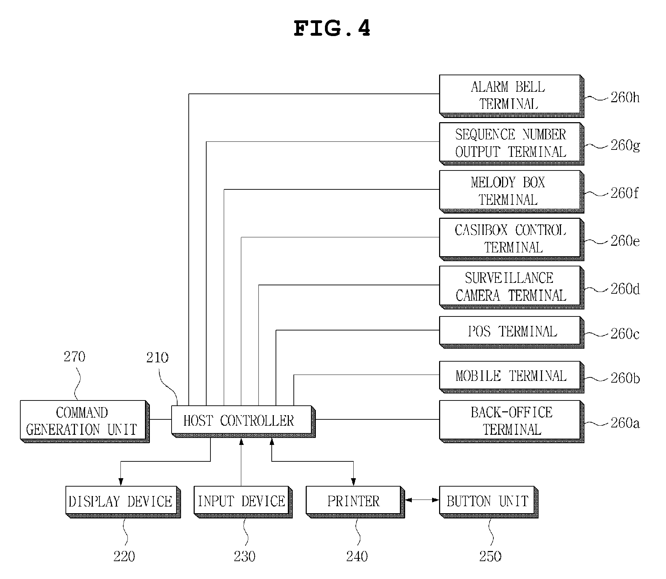

FIG. 4 is a diagram of the printer system with an input function according to a second embodiment of the present invention.

As shown in FIG. 4, the printer system with an input function according to the second embodiment of the present invention includes a host controller 210, a display device 220, an input device 230, a printer 240, a button unit 250, a plurality of target computers 260a to 260h, and a command generation unit 270. Here, the host controller 210, the display device 220, the input device 230, and the command generation unit 2 70 constitute a host computer.

Further, as shown in this drawing, the target computers 260a to 260h include a back-office terminal 260a, a mobile terminal 260b, a POS terminal 260c, a surveillance camera terminal 260d, a cashbox control terminal 260e, a melody box terminal 260f, a sequence number output terminal 260g, and an alarm bell terminal 260h.

The difference between the printer system with an input function according to the second embodiment of the present invention and the printer system with an input function according to the first embodiment is that the printer 240 only sends a key value generated by the button unit 250 to the host controller 210, and the host controller 210 interprets the received key value through the command generation unit 2 70, forms command data, and then sends the command data to a relevant target computer.

In the printer system with an input function according to the second embodiment of the present invention, the host controller 210 runs POS application software, such as accounting software, and, when a key value is received from the printer 240, the host controller 210 sends the key value to the command generation unit 270, receives command data generated according to the key value, and then sends the command data to one of the target computers 260a to 260h.

Thereafter, the display device 220 displays a product price. The input device 230 includes a keyboard or a scanner, and receives requests from a user.

The printer 240 prints a receipt and sends a key value input from the button unit 250 to the host controller 210. Here, the printer 240 may be a receipt printer, a label printer, a mobile printer, or an industrial printer.

Further, the printer 240 can communicate with the host controller 210 via a wired or wireless connection. In the case of wireless communication, communication is performed using a local area communication method, such as ZigBee, RFID, or Bluetooth.

The button unit 250 includes n buttons and, when a user selects and presses one of the n buttons, the button unit outputs the key value of the pressed button to the printer 240.

Further, when the key value is input from the host controller 210, the command generation unit 270 generates a command corresponding to the key value by referring to a stored key value table (for example, the key value table of Table 1 may be used) and provides the generated command data to the host controller 210.

Meanwhile, each of the target computers 260a to 260h receives the command data from the host controller 210 and performs an operation according to the command data.

The operation of the printer system with an input function according to the second embodiment of the present invention having the above-described construction will be described below.

If a user of the printer 240 presses a designated one of the buttons connected to the printer 240 (for example, referring to Table 1, one of buttons 1, 2, and 3) when the paper of the printer 240 is out of stock, ingredients are insufficient or a client expresses a complaint, the printer 240 sends a key value corresponding to the pressed button to the host controller 210.

Thereafter, the host controller 210 sends the key value to the command generation unit 270, receives back-office terminal call command data, and then sends the received command data to the relevant terminal, that is, the back-office terminal 260a.

Thereafter, the back-office terminal 260a notifies a manager or engineer, who is the user thereof, of the call command and the reason for the call based on the call command. Therefore, the manager or engineer checks the call command, moves to the relevant place, and then takes appropriate measures.

Next, if the user of the printer 240 presses a button designated for the completion of the preparation of ordered food (for example, button 4) when the preparation of the ordered food has been completed in a kitchen in which the printer 240 is located, the printer 240 sends a key value corresponding to the pressed button to the host controller 210.

Further, the host controller 210 sends the key value to the command generation unit 270, receives mobile terminal user call command data generated by the command generation unit 270, and then sends the command data to the relevant terminal, that is, the mobile terminal 260b.

Therefore, a service worker who carries the mobile terminal 260b moves to the kitchen, and then carries the prepared food to a relevant table.

Meanwhile, in order to display a specific advertisement or an advertising slogan on a service worker display and a client display, if the user of the printer 240 presses a button designated in connection with the specific advertisement or advertising slogan (for example, button 5), the printer 240 sends a key value corresponding to the pressed button to the host controller 270.

Further, the host controller 210 sends the key value to the command generation unit 270, receives POS terminal display command data generated by the command generation unit 270, and then sends the received command data to the relevant terminal, that is, the POS terminal 260c.

Thereafter, the POS terminal 260c displays the specific advertisement or advertising slogan based on the display command data on the service worker display and the client display.

Next, if the user of the printer 240 presses a designated button (for example, button 6) when a surveillance camera needs to be operated because a specific situation occurs in a kitchen in which the printer 240 is located, the printer 240 sends a key value corresponding to the pressed button to the host controller 210.

Further, the host controller 210 sends the key value to the command generation unit 270, receives surveillance camera photographing request command data generated by the command generation unit 270, and then sends the received command data to the relevant terminal, that is, the surveillance camera terminal 260d.

Thereafter, the surveillance camera terminal 260d instructs a relevant surveillance camera to photograph and record the specific situation.

Meanwhile, when the user of the printer 240 presses a designated button in order to open a cashbox, the printer 240 sends a key value corresponding to the pressed button to the host controller 210.

Thereafter, the host controller 210 sends the key value to the command generation unit 270, receives cashbox opening request command data generated by the command generation unit 270, and sends the received command data to the relevant terminal, that is, the cashbox control terminal 260e.

Thereafter, the cashbox control terminal 260e opens the cashbox according to the cashbox opening command data.

Next, when the user of the printer 240 desires to output a melody and presses a relevant button, the printer 240 sends a key value corresponding to the pressed button to the host controller 210.

Thereafter, the host controller 210 sends the key value to the command generation unit 270, receives melody output command data generated by the command generation unit 270, and then outputs the received command data to the relevant terminal, that is, the melody box terminal 260f.

Thereafter, the melody box terminal 260f generates and outputs melody according to the melody output command data.

Meanwhile, when the user of the printer 240 desires to output a sequence number and presses a relevant button, the printer 240 sends a key value corresponding to the pressed button to the host controller 210.

Thereafter, the host controller 210 sends the key value to the command generation unit 270, receives sequence number output command data generated by the command generation unit 270, and then outputs the received command data to the relevant terminal, that is, the sequence number output terminal 260g.

Thereafter, the sequence number output terminal 260g generates and outputs a sequence number according to the sequence number output command data.

Meanwhile, when an emergency situation occurs and the user of the printer 240 presses a relevant button, the printer 240 sends a key value corresponding to the pressed button to the host controller 210.

Thereafter, the host controller 210 sends the key value to the command generation unit 270, receives police call command data generated by the command generation unit 270, and then outputs the received command data to the relevant terminal, that is, the alarm bell terminal 260h.

Thereafter, the alarm bell terminal 260h notifies the police station of the emergency situation according to the police call command data and calls the police.

According to the above-described present invention, a button unit is provided, so that the request of the printer user can be sent to the host computer and an action suitable to the request of the user can be performed, thereby increasing convenience to the user.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A printer system comprising:
a button unit configured to, when a user presses a button, generate and output a key value corresponding to the button;
a printer directly connected to the button unit, and configured to generate and output command data designated for the key value input from the button unit; and
a host computer configured to receive the command data generated by the printer and send the command data to one of target computers, including a back-office terminal, a mobile terminal, a Point of Sale (POS) terminal, a surveillance camera terminal, a cashbox control terminal, a melody box terminal, a sequence number output terminal, and an alarm bell terminal,
wherein, when the host computer notifies the printer that the host computer is in a command reception standby mode, the printer generates the command data according to the key value input from the button unit and sends the command data to the host computer when the host computer is in the command reception standby mode.

2. The printer system as set forth in claim 1, wherein the button unit comprises:
one or more buttons; and
a button control unit for, when each of the buttons is pressed, generating a key value corresponding to the pressed button.

3. The printer system as set forth in claim 1, wherein the printer comprises:
a button input unit for receiving the key value from the button unit;
a command generation unit for generating the command data based on the key value input from the button input unit by referring to a key value table, and outputting the generated command data;
a transmission/reception unit for transmitting/receiving data to/from the host computer; and
a control unit for transmitting the command data input from the command generation unit to the host computer through the transmission/reception unit.

4. A printer system comprising:
a button unit configured to, when a user presses a button, generate and output a key value corresponding to the pressed button;
a host computer configured to, when the key value is input, generate command data designated for the key value, and send the command data to one of target computers, including a back-office terminal, a mobile terminal, a POS terminal, a surveillance camera terminal, a cashbox control terminal, a melody box terminal, a sequence number output terminal, and an alarm bell terminal; and
a printer directly connected to the button unit and configured to transmit the key value output from the button unit to the host computer,
wherein, when the host computer notifies the printer that the host computer is in a command reception standby mode, the printer sends the key value input from the button unit to the host computer when the host computer is in the command reception standby mode.

5. The printer system as set forth in claim 4, wherein the host computer comprises:
a command generation unit for generating the command data based on the key value input from the button input unit by referring to a key value table, and outputting the generated command data; and
a host controller for receiving the key value sent from the printer, sending the key value to the command generation unit, and sending the command data input from the command generation unit to the relevant target computer.
